# EUROPEAN PATENT APPLICATION

(11) **EP 4 786 428 A1**
(43) Date of publication of application: **05.08.2026**
(21) Application number: 24871588.0
(22) Date of filing: 20.08.2024
(51) Int. Cl.: C03C 3/32, C03C 3/16, C03C 3/17, C03C 3/23, C03C 3/247, C03C 4/14, C03C 10/00, C03C 10/02, C03C 10/16, H01B 1/06, H01B 1/10, H01B 13/00, H01M 4/62, H01M 10/052, H01M 10/0562

(54) **GLASS, CRYSTALLIZED GLASS, SULFIDE SOLID ELECTROLYTE, ELECTRODE MIXTURE, SOLID ELECTROLYTE LAYER, AND LITHIUM ION SECONDARY BATTERY**

(30) Priority: 28.09.2023 JP 2023168392; 28.09.2023 JP 2023168395; 29.03.2024 JP 2024057517
(71) Applicant: AGC Inc., Tokyo 100-8405 (JP)
(72) Inventor: HIJIYA, Hiroyuki, Tokyo 100-8405 (JP); HAGIWARA, Takashi, Tokyo 100-8405 (JP); KITAMURA, Riku, Tokyo 100-8405 (JP); SEKI, Hidenobu, Tokyo 100-8405 (JP)
(74) Representative: Müller-Boré & Partner Patentanwälte PartG mbB
(86) International application number: PCT/JP2024/029454
(87) International publication number: WO 2025/069786

(57) **Abstract**

The present invention relates to glass which contains Li and P as elements constituting a cationic component and contains S as an element constituting an anionic component, and which has a composition that contains 30-42% of Li and 5-16% of P when displayed in atomic%, that has a glass transition point of 110-300°C, and that has a lithium ion conductivity of 2 mS/cm or more at 25°C.

## Description

### TECHNICAL FIELD

The present invention relates to a glass, a crystallized glass, a sulfide solid electrolyte, an electrode mixture, a solid electrolyte layer, and a lithium ion secondary battery.

### BACKGROUND ART

Lithium ion secondary batteries are widely used in portable electronic devices such as a mobile phone and a notebook computer, motor vehicles, or the like.

In the related art, a liquid electrolyte has been used in a lithium ion secondary battery, but there is a concern of liquid leakage, ignition, and the like, and it is necessary to increase the size of a case for safety design. It has also been desired to improve the short battery life and the narrow operating temperature range.

In contrast, attention has been paid to an all-solid-state lithium secondary battery in which a solid electrolyte is used as an electrolyte of a lithium ion secondary battery, from the viewpoint of improving safety, charging and discharging at a high speed, and reducing the size of the case.

The solid electrolytes are roughly classified into sulfide solid electrolytes and oxide solid electrolytes. Sulfide ions constituting the sulfide solid electrolytes have higher polarizability and higher ion conductivity than those of oxide ions constituting the oxide solid electrolytes.

On the other hand, the sulfide solid electrolyte has high reactivity with water in the air, and hydrogen sulfide is easily generated. Therefore, Patent Literature 1 discloses, as a solid electrolyte having excellent water resistance and a high ion conductivity, a solid electrolyte of a sulfide-based glass in which Li₂S/P₂S₅/LiI = 63/21/16 or 52/17/31, or a sulfide-based glass ceramic obtained by crystallizing a part of a sulfide-based glass in which Li₂S/P₂S₅/LiBr = 64/21/14.

### PATENT LITERATURE

Patent Literature 1: JP2018-049834A

### SUMMARY OF INVENTION

### TECHNICAL PROBLEM

The sulfide-based glass described in Patent Literature 1 is produced by a mechanical milling method in which raw materials are mechanically reacted using a ball mill or a bead mill.

However, as a result of studies by the present inventors, it has been found that in the glass obtained by the mechanical milling method, excess sulfur and residues of raw materials that have not reacted tend to remain, and these residues cause generation of hydrogen sulfide. When the glass is used as a sulfide solid electrolyte, a higher lithium ion conductivity is desired.

Therefore, an object of the present invention is to provide a glass that exhibits a high lithium ion conductivity and is excellent in water resistance by preventing generation of hydrogen sulfide. Another object of the present invention is to provide a crystallized glass obtained by crystallizing a part of the above glass, which is useful as a sulfide solid electrolyte. Still another object of the present invention is to provide a sulfide solid electrolyte containing the crystallized glass, an electrode mixture, a sulfide solid electrolyte layer, and a lithium ion secondary battery.

### SOLUTION TO PROBLEM

As a result of intensive studies, the present inventors have found that, by adopting a method of melting by heating raw materials or a raw material mixture obtained by mixing the raw materials followed by rapid cooling, vitrification can be achieved even in a composition range in which vitrification is difficult in the related art, and a highly homogeneous glass free of residue can be obtained. Therefore, the glass generates only a small amount of hydrogen sulfide and has excellent water resistance. Further, by forming a glass, various anion components and cation components can be selected, and a high lithium ion conductivity can be achieved.

That is, the present invention relates to the following [1] to [8].
[1] A glass including:
   Li and P as elements constituting a cation component; and
   S as an element constituting an anion component,
   in which a composition of the glass, as expressed in atomic%, satisfies Li: 30% to 42% and P: 5% to 16%,
   the glass has a glass transition temperature of 110°C to 300°C, and
   the glass has a lithium ion conductivity of 2 mS/cm or more at 25°C.
[2] The glass according to [1], further including at least one selected from the group consisting of Sn, Sb, Si, Ge, Ga, Al, B, C, Mg, Ca, Sr, and Ba as an element constituting the cation component.
[3] The glass according to [1] or [2], further including at least one selected from the group consisting of F, Cl, Br, I, O, Se, N, and C as an element constituting the anion component.
[4] A crystallized glass including a crystalline phase derived from the glass according to any one of [1] to [3].
[5] A sulfide solid electrolyte including the crystallized glass according to [4].
[6] An electrode mixture including the sulfide solid electrolyte according to [5].
[7] A solid electrolyte layer including the sulfide solid electrolyte according to [5].
[8] A lithium ion secondary battery including the sulfide solid electrolyte according to [5].

### ADVANTAGEOUS EFFECTS OF INVENTION

According to the present invention, a glass that exhibits a high lithium ion conductivity and is excellent in water resistance by preventing generation of hydrogen sulfide can be obtained. By crystallizing at least a part of the glass, a crystallized glass useful as a sulfide solid electrolyte can be obtained. Therefore, the solid electrolyte containing the crystallized glass can achieve favorable battery characteristics by being used in a solid electrolyte layer, an electrode mixture, or a lithium ion secondary battery.

### BRIEF DESCRIPTION OF DRAWINGS

FIG. 1 is a flow chart illustrating a method for producing a glass according to the present embodiment.
FIG. 2 is a flow chart illustrating a method for producing a crystallized glass according to the present embodiment.

### DESCRIPTION OF EMBODIMENTS

Hereinafter, the present invention is described in detail, but the present invention is not limited to the following embodiment, and can be freely modified and implemented without departing from the gist of the present invention. In addition, "to" indicating a numerical range is used to include numerical values written before and after it as a lower limit value and an upper limit value.

### <<Glass>>

The glass according to the present embodiment contains Li and P as elements constituting a cation component, and contains S as an element constituting an anion component.

The composition of the glass satisfies the following as expressed in atomic%.

Li: 30% to 42%, and P: 5% to 16%.

When the mechanical milling method in the related art is employed for the raw material mixture obtained by mixing raw materials so as to satisfy the above composition, the obtained solid becomes an amorphous phase, and does not have a glass transition temperature. However, in the present embodiment, a glass can be obtained by melting a raw material mixture followed by rapid cooling.

By forming a glass as described above, high homogeneity without residues such as residual sulfur and an unreacted raw material can be achieved, and high water resistance with a reduced amount of hydrogen sulfide generated can be achieved.

Unlike the case of the mechanical milling method, a desired glass can be obtained by selecting various anion components and cation components without considering hardness of raw materials. Therefore, a high lithium ion conductivity can be achieved.

The glass according to the present embodiment contains Li and P as the elements constituting the cation component, and may further contain at least one selected from the group consisting of Sn, Sb, Si, Ge, Ga, Al, B, C, Mg, Ca, Sr, and Ba. Among them, from the viewpoint of water resistance, at least one of Sb, Si, and Sn is preferably contained. From the viewpoint of ion conductivity, Al and B are preferably contained.

Each element constituting the cation component is described. The content of each element in the glass is as expressed in atomic%.

Li is an element responsible for ion conduction as a solid electrolyte, and is essential. The content of Li in the glass is 30% to 42%, and preferably 33% to 41%. Here, from the viewpoint of a lithium ion conductivity, the content is 30% or more, preferably 33% or more, and more preferably 35% or more. From the viewpoint of vitrification, the content is 42% or less, preferably 41% or less, and more preferably 40% or less.

P is an element that forms a glass network, and is essential. Among sulfides, a P-S bond is highly resistant to both oxidation and reduction. Therefore, the solid electrolyte has a wide potential window and excellent electrochemical stability. The content of P in the glass is 5% to 16%, and preferably 6% to 14%. Here, from the viewpoint of the vitrification, the content is 5% or more, preferably 6% or more, and more preferably 7% or more. From the viewpoint of the lithium ion conductivity, the content is 16% or less, preferably 14% or less, and more preferably 12% or less.

When the glass according to the present embodiment contains Si as an element constituting the cation component, Si has an effect of increasing the viscosity of a molten liquid to promote vitrification. The content of Si in the glass is preferably 0% to 10%, and when Si is contained, the content is more preferably 0.5% to 10%, and still more preferably 2% to 9%. Here, from the viewpoint of suitably obtaining the effect of Si, the content when Si is contained is preferably 0.5% or more, and more preferably 2% or more. From the viewpoint of electrochemical stability, the content of Si is preferably 10% or less, and more preferably 9% or less.

When the glass according to the present embodiment contains Sn as an element constituting the cation component, Sn has an effect of increasing the viscosity of a molten liquid to promote vitrification. The content of Sn in the glass is preferably 0% to 10%, and when Sn is contained, the content is more preferably 0.1% to 10%, and still more preferably 0.5% to 8%. Here, from the viewpoint of suitably obtaining the effect of Sn, the content when Sn is contained is preferably 0.1% or more, and more preferably 0.5% or more. From the viewpoint of the electrochemical stability, the content of Sn is preferably 10% or less, and more preferably 8% or less.

When the glass according to the present embodiment contains Sb as an element constituting the cation component, Sb has an effect of increasing the viscosity of a molten liquid to promote vitrification. The content of Sb in the glass is preferably 0% to 10%, and when Sb is contained, the content is more preferably 0.1% to 8%, and still more preferably 1% to 5%. Here, from the viewpoint of suitably obtaining the effect of Sb, the content when Sb is contained is preferably 0.1% or more, and more preferably 1% or more. From the viewpoint of the lithium ion conductivity, the content of Sb is preferably 10% or less, more preferably 8% or less, and still more preferably 5% or less.

When the glass according to the present embodiment contains Ge as an element constituting the cation component, Ge has an effect of promoting improvement in lithium ion conductivity. The content of Ge in the glass is preferably 0% to 10%, and when Ge is contained, the content is more preferably 0.1% to 8%, and still more preferably 1% to 5%. Here, from the viewpoint of suitably obtaining the effect of Ge, the content when Ge is contained is preferably 0.1% or more, and more preferably 1% or more. From the viewpoint of glass formability, the content of Ge is preferably 10% or less, more preferably 8% or less, and still more preferably 5% or less.

When the glass according to the present embodiment contains Ga as an element constituting the cation component, Ga has an effect of promoting improvement in lithium ion conductivity. The content of Ga in the glass is preferably 0% to 10%, and when Ga is contained, the content is more preferably 0.1% to 8%, and still more preferably 1% to 5%. Here, from the viewpoint of suitably obtaining the effect of Ga, the content when Ga is contained is preferably 0.1% or more, and more preferably 1% or more. From the viewpoint of the glass formability, the content of Ga is preferably 10% or less, more preferably 8% or less, and still more preferably 5% or less.

When the glass according to the present embodiment contains Al as an element constituting the cation component, Al has an effect of increasing the viscosity of a molten liquid to promote vitrification. The content of Al in the glass is preferably 0% to 10%, and when Al is contained, the content is more preferably 0.1% to 8%, and still more preferably 1% to 5%. Here, from the viewpoint of suitably obtaining the effect of Al, the content when Al is contained is preferably 0.1% or more, and more preferably 1% or more. From the viewpoint of the lithium ion conductivity, the content of Al is preferably 10% or less, more preferably 8% or less, and still more preferably 5% or less.

When the glass according to the present embodiment contains B as an element constituting the cation component, B has an effect of increasing the viscosity of a molten liquid to promote vitrification. The content of B in the glass is preferably 0% to 10%, and when B is contained, the content is more preferably 0.1% to 8%, and still more preferably 1% to 5%. Here, from the viewpoint of suitably obtaining the effect of B, the content when B is contained is preferably 0.1% or more, and more preferably 1% or more. From the viewpoint of the lithium ion conductivity, the content of B is preferably 10% or less, more preferably 8% or less, and still more preferably 5% or less.

When the glass according to the present embodiment contains C as an element constituting the cation component, C has an effect of increasing the glass forming ability. The content of C in the glass is preferably 0% to 10%, and when C is contained, the content is more preferably 0.1% to 8%, and still more preferably 1% to 5%. Here, from the viewpoint of suitably obtaining the effect of C, the content when C is contained is preferably 0.1% or more, and more preferably 1% or more. From the viewpoint of the lithium ion conductivity, the content of C is preferably 10% or less, more preferably 8% or less, and still more preferably 5% or less.

When the glass according to the present embodiment contains an alkaline earth metal element as an element constituting the cation component, the alkaline earth metal element has an effect of increasing the glass forming ability. Examples of the alkaline earth metal element include one or more selected from the group consisting of Mg, Ca, Sr, and Ba.

The content of each alkaline earth metal element in the glass is preferably 0% to 10%, and when the alkaline earth metal element is contained, the content is more preferably 0.1% to 8%, and still more preferably 1% to 5%. Here, from the viewpoint of suitably obtaining the effect of the alkaline earth metal element, the content when the alkaline earth metal element is contained is preferably 0.1% or more, and more preferably 1% or more. From the viewpoint of the lithium ion conductivity, the content of each alkaline earth metal element is preferably 10% or less, more preferably 8% or less, and still more preferably 5% or less.

The total content of the alkaline earth metal element in the glass is preferably 0% to 20%, and when the alkaline earth metal element is contained, the total content is more preferably 0.2% to 18%, and still more preferably 1% to 15%. Here, the total content is preferably 0.2% or more, and more preferably 1% or more, and is preferably 20% or less, more preferably 18% or less, and still more preferably 15% or less.

The glass according to the present embodiment contains S as the element constituting the anion component, and may further contain at least one selected from the group consisting of F, Cl, Br, I, O, Se, N, and C. Among them, from the viewpoint of improving the ion conductivity, it is preferable to contain at least one selected from the group consisting of F, Cl, Br, and I, it is more preferable to contain at least one selected from the group consisting of Cl, Br, and I, and it is still more preferable to contain I. From the viewpoint of improving the vitrification ability, it is preferable to contain one or more selected from the group consisting of O, Se, N, and C.

Each element constituting the anion component is described. The content of each element in the glass is as expressed in atomic%.

S is an element that forms a P-S bond together with P, and is an essential element for forming a glass phase. The content of S in the glass is preferably 30% to 60%, more preferably 33% to 55%, and still more preferably 37% to 50%. Here, from the viewpoint of the vitrification, the content is preferably 30% or more, more preferably 33% or more, and still more preferably 37% or more. From the viewpoint of the lithium ion conductivity, the content is preferably 60% or less, more preferably 55% or less, and still more preferably 50% or less.

When the glass according to the present embodiment contains a halogen element (X) as an element constituting the anion component, X is an element that contributes to a high lithium ion conductivity.

The total content of X in the glass is preferably 0% to 20%, and when X is contained, the total content is more preferably 1% to 20%, may be 1% to 12%, or may be 2% to 10%. Here, from the viewpoint of suitably obtaining the effect of X, the total content when X is contained is preferably 1% or more, more preferably 2% or more, still more preferably 3% or more, and particularly preferably 6% or more. From the viewpoint of preventing precipitation of lithium halide crystals, the total content of X is preferably 20% or less, more preferably 19% or less, and still more preferably 17% or less. It has been considered that, in the mechanical milling method used in the related art, vitrification is difficult particularly in a composition range in which the content of X is large. However, as a result of studies by the present inventors, it has been newly found that by adopting a method of melting through heating raw materials or a raw material mixture obtained by mixing the raw materials followed by rapid cooling, vitrification can be achieved even in the composition range, and a high lithium ion conductivity can be achieved. Therefore, the vitrification can be achieved even when the total content of X is about 20%. However, in the glass according to the present embodiment, when lithium halide crystals are easily precipitated, the total content of X may be 12% or less, or may be 10% or less.

Among them, it is preferable that the total content of Br and I accounts for 50% or more of the total content of X, more preferably 70% or more, and may be 100%, that is, X may consist solely of Br and I. Further, the content ratio represented by Cl:Br is preferably 100:0 to 0:100, more preferably 80:20 to 0:100, and still more preferably 60:40 to 0:100. However, this does not in any way preclude X from containing only Cl.

When the glass according to the present embodiment contains F as an element constituting the anion component, the content of F in the glass is preferably 0.1% to 20%, and may be 0.1% to 10%, or may be 0.5% to 5%. Here, the content of F is preferably 0.1% or more, more preferably 0.5% or more, still more preferably 3% or more, and particularly preferably 6% or more. The content of F is preferably 20% or less, more preferably 19% or less, and still more preferably 17% or less. When lithium fluoride crystals are easily precipitated, the content of F may be 10% or less, or may be 5% or less.

When the glass according to the present embodiment contains Cl as an element constituting the anion component, the content of Cl in the glass is preferably 0.1% to 20%, and may be 0.1% to 10%, or may be 0.5% to 5%. Here, the content of Cl is preferably 0.1% or more, more preferably 0.5% or more, still more preferably 3% or more, and particularly preferably 6% or more. The content of Cl is preferably 20% or less, more preferably 19% or less, and still more preferably 17% or less. When lithium chloride crystals are easily precipitated, the content of Cl may be 10% or less, or may be 5% or less.

When the glass according to the present embodiment contains Br as an element constituting the anion component, the content of Br in the glass is preferably 0.1% to 20%, and may be 0.1% to 10%, or may be 1% to 8%. Here, the content of Br is preferably 0.1% or more, more preferably 1% or more, still more preferably 3% or more, and particularly preferably 6% or more. The content of Br is preferably 20% or less, more preferably 19% or less, and still more preferably 17% or less. When lithium bromide crystals are easily precipitated, the content of Br may be 10% or less, or may be 8% or less.

It is preferable that the glass according to the present embodiment contains I as an element constituting the anion component, since I contributes particularly to improve an ion conductivity. The content of I in the glass is preferably 0.1% to 20%, and may be 0.1% to 10%, may be 1% to 8%, or may be 2% to 6%. Here, the content of I is preferably 0.1% or more, more preferably 1% or more, still more preferably 2% or more, even more preferably 3% or more, and particularly preferably 6% or more. The content of I is preferably 20% or less, more preferably 19% or less, and still more preferably 17% or less. When lithium iodide crystals are easily precipitated, or from the viewpoint of improving the vitrification, the content of I may be 10% or less, may be 8% or less, or may be 6% or less.

When the glass according to the present embodiment contains O as an element constituting the anion component, O has an effect of improving an ion conductivity. The content of O in the glass is preferably 0% to 5%, and when O is contained, the content is more preferably 0.1% to 4%, and still more preferably 0.5% to 3%. Here, from the viewpoint of suitably obtaining the effect of O, the content when O is contained is preferably 0.1% or more, and more preferably 0.5% or more. From the viewpoint of the water resistance, the content of O is preferably 5% or less, more preferably 4% or less, and still more preferably 3% or less.

When the glass according to the present embodiment contains Se as an element constituting the anion component, Se has an effect of improving an ion conductivity. The content of Se in the glass is preferably 0% to 5%, and when Se is contained, the content is more preferably 0.1% to 4%, and still more preferably 0.5% to 3%. Here, from the viewpoint of suitably obtaining the effect of Se, the content when Se is contained is preferably 0.1% or more, and more preferably 0.5% or more. From the viewpoint of the water resistance, the content of Se is preferably 5% or less, more preferably 4% or less, and still more preferably 3% or less.

When the glass according to the present embodiment contains N as an element constituting the anion component, N has an effect of improving an ion conductivity. The content of N in the glass is preferably 0% to 5%, and when N is contained, the content is more preferably 0.1% to 4%, and still more preferably 0.5% to 3%. Here, from the viewpoint of suitably obtaining the effect of N, the content when N is contained is preferably 0.1% or more, and more preferably 0.5% or more. From the viewpoint of the water resistance, the content of N is preferably 5% or less, more preferably 4% or less, and still more preferably 3% or less.

When the glass according to the present embodiment contains C as an element constituting the anion component, C has an effect of improving an ion conductivity. The content of C in the glass is preferably 0% to 5%, and when C is contained, the content is more preferably 0.1% to 4%, and still more preferably 0.5% to 3%. Here, from the viewpoint of suitably obtaining the effect of C, the content when C is contained is preferably 0.1% or more, and more preferably 0.5% or more. From the viewpoint of the water resistance, the content of C is preferably 5% or less, more preferably 4% or less, and still more preferably 3% or less.

C may be an element constituting the cation component or an element constituting the anion component. When sulfur (S) is excessive with respect to a glass, C can be determined as the element constituting the cation component, and when sulfur is deficient, C can be determined as the element constituting the anion component.

The glass according to the present embodiment may further contain other elements in addition to the elements constituting the cation component or the anion component as long as the effects of the present invention are not impaired.

Examples of the other elements include Na, K, Y, Zr, Cr, Zn, Fe, Co, Ti, and Mn.

The total content of the other elements in the glass according to the present embodiment may be, for example, 0% to 5%, as expressed in atomic%. When the other elements are contained, the total content may be 0.1% to 4% or may be 0.5% to 3%. Here, the total content may be 0.1% or more, or may be 0.5%, and may be 4% or less, or may be 3% or less.

The composition of the glass according to the present embodiment may satisfy Li: 30% to 42% and P: 5% to 16%, as expressed in atomic%, and in addition, preferably satisfies one or more of S: 30% to 60%, X: 1% to 20%, Si: 1% to 10%, and Sn: 0.1% to 10%, preferably satisfies two or more thereof, and more preferably satisfies three or more thereof.

When the above X: 1% to 20% is satisfied, it is more preferable to satisfy at least one of Br: 0.1% to 19% and I: 0.1% to 19%.

The composition of the glass according to the present embodiment may satisfy one or more of S: 30% to 60%, X: 1% to 12%, Si: 1% to 10%, and Sn: 0.1% to 10%, may satisfy two or more thereof, and may satisfy three or more thereof.

When the above X: 1% to 12% is satisfied, at least one of Br: 0.1% to 10% and I: 0.1% to 10% may be satisfied.

Methods for determining constituent elements of the glass according to the present embodiment and contents (composition ratios) thereof differ depending on the element. For example, P, S, Sn, Sb, Si, Ge, Ga, Al, Mg, Ca, Sr, Ba, and Se are determined by ICP emission spectroscopy, Li and B are determined by atomic absorption spectroscopy, X is determined by ion chromatography, and C, O, and N are determined by X-ray photoelectron spectroscopy (XPS). Details of each analysis are described later in the section of Examples.

The glass according to the present embodiment has a glass transition temperature of 110°C to 300°C, preferably 130°C to 300°C, more preferably 140°C to 290°C, and particularly preferably 150°C to 280°C. Here, in the present embodiment, a glass having a glass transition temperature can be obtained by melting a raw material mixture followed by rapid cooling.

From the viewpoint of moldability for improving stability of the glass, the glass transition temperature is 110°C or higher, preferably 130°C or higher, more preferably 140°C or higher, and particularly preferably 150°C or higher. From the viewpoint of the moldability, the glass transition temperature is 300°C or lower, preferably 290°C or lower, and more preferably 280°C or lower.

The glass transition temperature in the present description is a temperature at the first inflection point of a DSC chart obtained by differential scanning calorimetry (DSC), and can be adjusted by a glass composition or a cooling rate from a molten liquid.

The crystallization temperature of the glass according to the present embodiment is not particularly limited, and is, for example, preferably 130°C to 400°C, more preferably 140°C to 400°C, and particularly preferably 150°C to 370°C. Here, from the viewpoint of the moldability, the crystallization temperature is preferably 130 or higher, more preferably 140°C or higher, and particularly preferably 150°C or higher. From the viewpoint of the stability of the glass, the crystallization temperature is preferably 400°C or lower, and more preferably 370°C or lower.

The difference in temperature that is represented by (Tc - Tg) is preferably 10°C to 200°C, and more preferably 20°C to 180°C, where Tg is the glass transition temperature and Tc is the crystallization temperature of the glass according to the present embodiment. Here, from the viewpoint of the stability of the glass, the difference is preferably 10°C or higher, and more preferably 20°C or higher. From the viewpoint of productivity, the difference is preferably 200°C or lower, and more preferably 180°C or lower.

The glass according to the present embodiment has a lithium ion conductivity at 25°C when formed into a powder compact at 380 MPa of 2 mS/cm or more, preferably 3 mS/cm or more, and the higher the more preferred.

The lithium ion conductivity in the present description is obtained by an AC impedance measurement using, as a measurement sample, a powder compact obtained by compacting a powder, which is a sample, at 380 MPa. Specifically, an AC impedance of the measurement sample is measured at a measurement frequency of 100 Hz to 1 MHz, a measurement voltage of 100 mV, and a measurement temperature of 25°C, and a value determined from the obtained Nyquist plot is regarded as the lithium ion conductivity.

The lithium ion conductivity can be adjusted by the composition of the glass, the reduction of heat unevenness when the molten raw material mixture is rapidly cooled, the cooling rate when cooling, and the like. In particular, the glass according to the present embodiment is obtained not by the mechanical milling method in the related art but by melting the raw material mixture followed by rapid cooling. Accordingly, the vitrifiable range is widened, thereby facilitating inclusion of a plurality of desired anion components and cation components, and as a result, a composition capable of achieving a high lithium ion conductivity can be adopted.

The amount of H₂S generated from the glass according to the present embodiment when exposed to the air having a dew point of -30°C for 1 hour is preferably 10 mL/g or less, more preferably 4 mL/g or less, still more preferably 1 mL/g or less, and particularly preferably 0.1 mL/g or less, and the smaller, the more preferred.

More specific measurement conditions of the amount of H₂S generated are as follows.

First, the sample is passed through a 100 µm mesh to obtain a powder having an average particle size of 10 µm to 20 µm. Then, the amount of hydrogen sulfide (H₂S) generated, as measured when 10 mg of such a powder is exposed to the air humidified to a dew point of - 30°C for 1 hour, is monitored, and the total amount is defined as the amount of H₂S generated.

### <<Crystallized Glass>>

The crystallized glass according to the present embodiment is obtained by subjecting the glass described in <<Glass>> above to a heat treatment to crystallize at least a part of the glass.

That is, the crystallized glass according to the present embodiment contains a crystalline phase derived from the glass described in <<Glass>> above. An amorphous phase may be optionally further contained, and the amorphous phase in this case includes a phase formed of the glass described in <<Glass>> above.

Here, the phase derived from the glass means a crystalline phase obtained by crystallizing such a glass by the heat treatment. The glass from which the crystalline phase is derived can be estimated based on a crystal structure and a mass ratio of the crystalline phase and a composition of the entire crystallized glass, except for a case where the crystallized glass is composed only of a crystalline phase having a crystallinity of 100%.

Specifically, Rietveld analysis or the like is performed on an XRD pattern obtained by a powder X-ray diffraction (XRD) measurement of the crystalline phase, and the crystal structure and the mass ratio of the crystalline phase are calculated. On the other hand, the composition of the entire crystallized glass is determined by using ICP emission spectroscopic analysis, analysis by atomic absorption, analysis by ion chromatography, analysis by XPS, or the like in accordance with the type of the element, similar to the above-described method for determining the constituent elements of the glass and the contents (composition ratios) thereof.

The composition and the amount of the amorphous phase can be calculated by subtracting, from the composition of the entire crystallized glass, the composition of the crystalline phase weighted by its mass ratio. When the composition of the amorphous phase is regarded as a glass composition before crystallization and corresponds to the glass according to the present embodiment described in <<Glass>> above, the crystallized glass can be determined to correspond to the crystallized glass according to the present embodiment.

The glass composition before the crystallized glass is obtained by crystallization is referred to as a base composition, and the base composition of the crystallized glass according to the present embodiment is the same as the composition described in <<Glass>> above. That is, the composition of the amorphous phase of the crystallized glass according to the present embodiment can be said to be the same as the base composition.

In the present embodiment, the composition of the crystalline phase differs from the above base composition by at most about 30%, and the P tends to decrease.

The crystalline phase may have a thiosilicon region II-type or LGPS crystal structure.

When the crystallized glass according to the present embodiment exhibits a lithium ion conductivity higher than a known value of lithium ion conductivity for the crystal structure of its crystalline phase, it can be presumed that the crystallized glass is obtained by crystallizing the above <<Glass>> obtained by melting the raw material mixture and then rapidly cooling it, rather than the mechanical milling method in the related art.

The proportion (crystallinity) of the crystalline phase in the crystallized glass according to the present embodiment is preferably 10 mass% to 100 mass%, more preferably 20 mass% to 90 mass%, and still more preferably 30 mass% to 80 mass%. Here, from the viewpoint of the lithium ion conductivity, the crystallinity is preferably 10 mass% or more, more preferably 20 mass% or more, and still more preferably 30 mass% or more. From the viewpoint of the productivity, the crystallinity is preferably 100 mass% or less, more preferably 90 mass% or less, and still more preferably 80 mass% or less.

The crystallized glass according to the present embodiment may have a crystallinity of 100 mass% and may be composed only of a crystalline phase. The crystallinity is determined by powdering the crystallized glass, performing a powder X-ray diffraction (XRD) measurement together with a crystal powder serving as an internal standard, determining a proportion of crystals, and performing Rietveld analysis by subtracting the proportion from 100 mass%.

Since the glass before crystallization in the present embodiment has a high lithium ion conductivity, the crystallized glass according to the present embodiment also has a high lithium ion conductivity, and is suitably used as a solid electrolyte.

That is, the crystallized glass according to the present embodiment has a lithium ion conductivity at 25°C when formed into a powder compact at 380 MPa of preferably 2 mS/cm or more, more preferably 3 mS/cm or more, and the higher the more preferred.

### <<Sulfide Solid Electrolyte>>

The sulfide solid electrolyte according to the present embodiment contains the crystallized glass described in <<Crystallized Glass>> above.

Constituent elements and composition ratios of the crystallized glass can be regarded as substantially the same as constituent elements and composition ratios of the sulfide solid electrolyte according to the present embodiment. Therefore, preferred aspects of the constituent elements and the composition ratios of the sulfide solid electrolyte can be read as preferred aspects of the constituent elements and the composition ratios of the crystallized glass.

However, the sulfide solid electrolyte according to the present embodiment may contain phases other than the crystallized glass.

The average particle size (D50) of the sulfide solid electrolyte according to the present embodiment is preferably 0.5 µm to 100 µm, more preferably 0.8 µm to 80 µm, and still more preferably 1 µm to 50 µm. Here, from the viewpoint of reducing a load in a fine pulverization step when the sulfide solid electrolyte is used in a secondary battery, the average particle size is preferably 100 µm or less, more preferably 80 µm or less, and still more preferably 50 µm or less. From the viewpoint of ease of handling the powder, the average particle size is preferably 0.5 µm or more, more preferably 0.8 µm or more, and still more preferably 1 µm or more.

The average particle size (D50) can be adjusted by performing coarse pulverization on the obtained sulfide solid electrolyte. The coarse pulverization may be performed by a known method in the related art, and examples thereof include a cutter mill, a planetary ball mill, a bead mill, and a jet mill. When the coarse pulverization is performed, wet pulverization is preferred.

The sulfide solid electrolyte according to the present embodiment is suitable as an electrolyte of a lithium ion secondary battery. When the sulfide solid electrolyte is used for a lithium ion secondary battery, the sulfide solid electrolyte forms a solid electrolyte layer together with other components such as a binder as necessary. That is, the solid electrolyte layer according to the present embodiment contains the sulfide solid electrolyte.

As the binder and other components constituting the solid electrolyte layer, known materials in the related art can be used.

The content of the sulfide solid electrolyte according to the present embodiment with respect to the entire solid electrolyte layer is preferably 80 mass% or more, and more preferably 90 mass% or more.

The sulfide solid electrolyte according to the present embodiment may be mixed with a positive electrode active material or a negative electrode active material to be used as an electrode mixture of a positive electrode layer or a negative electrode layer. That is, the electrode mixture according to the present embodiment contains the sulfide solid electrolyte.

As the positive electrode active material or negative electrode active material used for the positive electrode layer or negative electrode layer, a current collector, a binder, a conductive aid, and the like, known materials according to the related art can be used.

The lithium ion secondary battery according to the present embodiment includes the positive electrode layer, the solid electrolyte layer, and the negative electrode layer, and the sulfide solid electrolyte according to the present embodiment is preferably contained in at least one layer selected from the group consisting of the positive electrode layer, the solid electrolyte layer, and the negative electrode layer. That is, the lithium ion secondary battery according to the present embodiment includes the sulfide solid electrolyte.

As a material of an outer casing of the lithium ion secondary battery, known materials according to the related art may also be used. As a shape of the lithium ion secondary battery, known shapes according to the related art may be used, and examples of the shape include a coin shape, a sheet shape (film shape), a folded shape, a wound cylindrical shape with a bottom, and a button shape. The shape thereof can be appropriately selected according to the application.

### <<Method for Producing Glass and Crystallized Glass>>

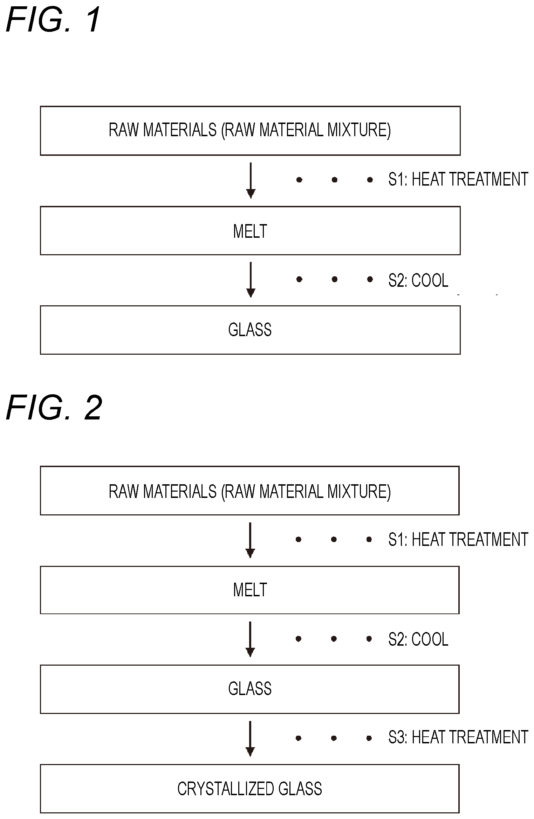

The method for producing a glass according to the present embodiment includes the following step 1 and step 2 in order as step S1 and step S2 as illustrated in FIG. 1.

Step S1: step 1 of heating a raw material mixture obtained by mixing raw materials containing Li, P, and S to obtain a melt

Step S2: step 2 of cooling and solidifying the melt obtained in step 1 to obtain a glass

The method for producing a crystallized glass according to the present embodiment includes the following step 1 to step 3 in order as step S1 to step S3 as illustrated in FIG. 2. Here, step S1 and step S2 are respectively the same as step S1 and step S2 in the method for producing a glass according to the present embodiment described above.

Step S1: step 1 of heating a raw material mixture obtained by mixing raw materials containing Li, P, and S to obtain a melt

Step S2: step 2 of cooling and solidifying the melt obtained in step 1 to obtain a glass

Step S3: step 3 of subjecting the glass obtained in step 2 to a heat treatment to crystallize a part of the glass to obtain a crystallized glass

The heating in step 1 and the cooling in step 2 are performed under ambient pressure, and a cooling rate in the cooling and solidifying is 100°C/sec or more. During the cooling, the cooling is performed so that the melt is uniformly cooled without heat unevenness. Accordingly, residues such as residual sulfur and unreacted raw materials can be eliminated and homogenization can be achieved, and thus favorable water resistance can be achieved. By widening the vitrifiable range and increasing compositional freedom, a high lithium ion conductivity can be achieved.

In the present description, "under ambient pressure" means a pressure range of about (gauge pressure ± 15 kPa).

In step 1 above, the respective raw materials are mixed such that the obtained glass contains Li and P as elements constituting the cation component and S as an element constituting the anion component, and the composition thereof satisfies Li: 30% to 42% and P: 5% to 16%, as expressed in atomic%.

Each step is described below.

### <Step 1>

Step S1 in the present embodiment is step 1 of mixing raw materials to obtain a raw material mixture containing Li, P, and S, and then heating the raw material mixture.

Specifically, the raw material mixture is obtained by mixing a raw material containing a Li element, a raw material containing a P element, and a raw material containing an S element. When it is desired to obtain a glass further containing X as a constituent element, in addition to the raw material containing the Li element, the raw material containing the P element, and the raw material containing the S element, a raw material containing an X element is further mixed to obtain a raw material mixture containing Li, P, S, and X. Here, the X element is at least one element selected from the group consisting of F, Cl, Br, and I.

Examples of the raw material containing the Li element include lithium compounds such as lithium sulfide (Li₂S), lithium carbonate (Li₂CO₃), lithium sulfate (Li₂SO₄), lithium oxide (Li₂O), and lithium hydroxide (LiOH), and metallic lithium. The raw material containing the Li element may be used alone or in combination of two or more kinds thereof.

As the raw material containing the Li element, lithium sulfide is preferably used from the viewpoint of obtaining the sulfide-based glass. When the glass to be obtained contains a halogen element, a lithium halide (LiX, X is a halogen element) is also preferred as the raw material containing the Li element. The lithium halide is to be described later.

Examples of the raw material containing the P element include phosphorus sulfides such as phosphorus pentasulfide (P₂S₅) and phosphorus trisulfide (P₂S₃), phosphorus compounds such as sodium phosphate (Na₃PO₄), and elemental phosphorus. The raw material containing the P element may be used alone or in combination of two or more kinds thereof.

The raw material containing the P element is preferably phosphorus sulfides, and more preferably phosphorus pentasulfide (P₂S₅), from the viewpoint of preventing inclusion of elements other than the elements constituting the target glass.

When the above elemental phosphorus is used as a raw material containing the P element, examples thereof include yellow phosphorus, red phosphorus, purple phosphorus, and black phosphorus.

Examples of the raw material containing the S element include lithium sulfide (Li₂S), phosphorus sulfides such as phosphorus trisulfide (P₂S₃) and phosphorus pentasulfide (P₂S₅), other sulfur compounds containing phosphorus, and a sulfur-containing compound. Examples of the sulfur-containing compound include H₂S, CS₂, iron sulfides (such as FeS, Fe₂S₃, FeS₂, and Fe₁₋ₓS), bismuth sulfide (Bi₂S₃), and copper sulfides (such as CuS, Cu₂S, and Cu₁₋ₓS). The raw material containing the S element may be used alone or in combination of two or more kinds thereof.

The raw material containing the S element is preferably lithium sulfide or phosphorus sulfides, and more preferably phosphorus pentasulfide (P₂S₅) as the phosphorus sulfide, from the viewpoint of preventing the inclusion of elements other than the elements constituting the target glass. Lithium sulfide is a compound serving as both the raw material containing the Li element and the raw material containing the S element, and the phosphorus sulfide is a compound serving as both the raw material containing the S element and the raw material containing the P element.

Examples of the raw material containing the X element include lithium halides such as lithium fluoride (LiF), lithium chloride (LiCl), lithium bromide (LiBr), and lithium iodide (LiI), phosphorus halides, phosphoryl halides, sulfur halides, sodium halides, and boron halides. The raw material containing the X element may be used alone or in combination of two or more kinds thereof.

From the viewpoint of the reactivity, the raw material containing the X element is preferably the lithium halides, more preferably LiCl, LiBr, or LiI, and still more preferably LiBr or Lil.

The raw material mixture may be obtained by further mixing other raw materials in accordance with the desired glass composition.

For example, when the glass further contains at least one selected from the group consisting of Sn, Sb, Si, Ge, Ga, Al, B, C, Mg, Ca, Sr, and Ba as an element constituting the cation component, a raw material containing these elements may be further used. The raw material is not limited to a compound, and may be an elemental metal.

When the glass further contains at least one selected from the group consisting of O, Se, N, and C in addition to X as an element constituting the anion component, a raw material containing these elements may be further used. The raw material is not limited to a compound, and may be an elemental metal.

When the glass further contains the above-described other elements, a raw material containing Na, K, Y, Zr, Cr, Zn, Fe, Co, Ti, Mn, and the like may be further used. Si, B, Ge, Al, Sn, and Sb are elements that can occupy the P site when the obtained glass is further crystallized to form a crystallized glass.

As these other raw materials, known materials in the related art can be adopted.

Examples of the raw material containing the Si element include Si, SiO₂, SiS₂, and SiS. Among them, SiO₂ is more preferred from the viewpoint of the lithium ion conductivity. These compounds may be used alone or in combination of two or more kinds thereof.

Examples of the raw material containing the Sn element include Sn, SnS, SnS₂, SnO, SnO₂, and SnCl₂. Among them, from the viewpoint of the lithium ion conductivity, SnS₂ and SnCl₂ are preferred, and SnS₂ is more preferred. These compounds may be used alone or in combination of two or more kinds thereof.

Examples of the raw material containing the Sb element include Sb, Sb₂S₃, Sb₂O₃, Sb₂O₅, SbCl₃, and SbCls. Among them, from the viewpoint of the lithium ion conductivity and the water resistance, Sb₂S₃ and SbCl₃ are preferred, and Sb₂S₃ is more preferred. These compounds may be used alone or in combination of two or more kinds thereof.

Examples of the raw material containing the Ge element include Ge, GeO₂, GeS, GeS₂, and GeCl₂. Among them, from the viewpoint of the lithium ion conductivity, GeS₂ and GeCl₂ are preferred, and GeS₂ is more preferred. These compounds may be used alone or in combination of two or more kinds thereof.

Examples of the raw material containing the Al element include Al, Al₂S₃, Al₂O₃, and AlCl₃. Among them, from the viewpoint of the lithium ion conductivity and the water resistance, Al₂S₃ and AlCl₃ are preferred, and Al₂S₃ is more preferred. These compounds may be used alone or in combination of two or more kinds thereof.

Examples of the raw material containing the B element include B, B₂O₃ and B₂S₃. Among them, from the viewpoint of the water resistance of the glass, B₂O₃ is more preferred. These compounds may be used alone or in combination of two or more kinds thereof.

These raw materials are appropriately blended according to the composition of the glass to be obtained. Specifically, in order to obtain the glass or crystallized glass described in <<Glass>> or <<Crystallized Glass>> above, the raw materials are mixed so as to contain Li, P, and S and satisfy at least Li: 30% to 42% and P: 5% to 16%.

In addition to the above, preferred aspects of the obtained glass and crystallized glass are the same as the preferred aspects described in <<Glass>> and <<Crystallized Glass>> above, respectively.

From the viewpoint of shortening a holding time during heating for obtaining the melt, it is preferable to reduce a particle size of each raw material. When the particle size of the raw material is too large, the homogeneity of the glass may be affected, and it is preferable that the particle size of the raw material is small to some extent from such a viewpoint. However, the production method according to the present embodiment is excellent in composition controllability. Therefore, for example, even when a raw material having a particle size that can reduce the homogeneity in a production method in the related art is used, a more homogeneous glass can be produced in the production method according to the present embodiment.

From the viewpoint, specifically, the particle size of each raw material is preferably 1 mm or less, more preferably 500 µm or less, still more preferably 250 µm or less, even more preferably 100 µm or less, and particularly preferably 50 µm or less. The smaller the particle size, the more preferred, and the practical lower limit thereof is about 0.1 µm, and the particle size may be 1 µm or more or 5 µm or more.

As described above, according to the production method of the present embodiment, even when a raw material having a relatively large particle size is used, a homogeneous glass is easily obtained. In consideration of this, for example, from the viewpoint of reducing the production cost, the particle size of each raw material may be 10 µm or more, may be 100 µm or more, or may be 250 µm or more.

Accordingly, the particle size of each raw material is preferably 0.1 µm to 1 mm, more preferably 1 µm to 500 µm, still more preferably 5 µm to 250 µm, even more preferably 5 µm to 100 µm, and particularly preferably 5 µm to 50 µm. From the viewpoint of the production cost, the particle size of each raw material is preferably 10 µm to 1 mm, more preferably 100 µm to 1 mm, and still more preferably 250 µm to 500 µm.

In the present description, the particle size of each raw material refers to an average particle size (D50) represented by a median diameter determined from a chart of a volume-based particle size distribution obtained by measuring a particle size distribution using a laser diffraction particle size distribution analyzer MT3300EXII manufactured by Microtrac.

The raw materials can be mixed by, for example, mixing in a mortar, mixing using a medium such as a planetary ball mill, and medium-less mixing such as a pin mill, a powder stirrer, and air flow mixing. The raw materials may be made amorphous by mixing before heating.

The specific method for obtaining the melt by heating the raw material mixture is not particularly limited except that the heating is performed under ambient pressure.

In the production method according to the present embodiment, the compositional deviation between the composition of the raw material mixture and the composition of the obtained glass is small by performing the heating for melting the raw material mixture under ambient pressure. Further, by performing the heating in the gas atmosphere containing an S element, the compositional deviation can be further reduced. In the production method according to the present embodiment, the heating for obtaining the melt is performed in an environment in which the atmosphere is controlled under ambient pressure, and it is not necessary to perform the heating in a sealed tube. However, the use of the sealed tube is not excluded at all.

Here, the difference between the sealed tube and the environment in which the atmosphere is controlled under ambient pressure is that the pressure inside the sealed tube is under vacuum, that is, less than (gauge pressure - 15 kPa), whereas the pressure inside the container during the heating in the environment in which the atmosphere is controlled under ambient pressure is within a range of (gauge pressure ± 15 kPa).

That is, in the production method according to the present embodiment, the heating for obtaining the melt is performed under ambient pressure of (gauge pressure ± 15 kPa).

The pressure during the heating may be under ambient pressure of (gauge pressure ± 15 kPa), and is preferably (gauge pressure ± 10 kPa), more preferably (gauge pressure ± 5 kPa), and still more preferably (gauge pressure ± 2 kPa).

During the heating of the raw material mixture, in consideration of the fact that Li is an element that is less volatile and P is an element that is more volatile, it is preferable to adjust an addition proportion of Li and P in the raw material mixture so as to obtain desired contents of Li and P in the glass.

The production method according to the present embodiment may be a batch method or a continuous method.

Examples of the heat-resistant container in which the raw material mixture is placed include a heat-resistant container made of carbon, a heat-resistant container containing an oxide such as quartz, quartz glass, borosilicate glass, aluminosilicate glass, alumina, zirconia, and mullite, a heat-resistant container containing a nitride such as silicon nitride and boron nitride, and a heat-resistant container containing a carbide such as silicon carbide. These heat-resistant containers may have a bulk formed of the above material, or may be a container having a layer made of carbon, an oxide, a nitride, a carbide, or the like, such as a carbon-coated quartz tube.

The heating temperature for obtaining the melt of the raw material mixture varies depending on the raw materials to be used and the composition of the raw material mixture, and is, for example, preferably 600°C to 950°C, more preferably 630°C to 850°C, and still more preferably 650°C to 750°C. Here, from the viewpoint of a reaction rate, the heating temperature is preferably 600°C or higher, more preferably 630°C or higher, and still more preferably 650°C or higher. From the viewpoint of preventing the compositional deviation due to volatilization of the components, the heating temperature is preferably 950°C or lower, more preferably 850°C or lower, and still more preferably 750°C or lower.

The heating time varies depending on a scale, and is preferably 10 minutes to 10 hours, more preferably 30 minutes to 9.5 hours, still more preferably 45 minutes to 9 hours, and particularly preferably 1 hour to 9 hours. Here, from the viewpoint of allowing the reaction to proceed smoothly, the heating time is preferably 10 minutes or longer, more preferably 30 minutes or longer, still more preferably 45 minutes or longer, and particularly preferably 1 hour or longer. From the viewpoint of the productivity, the heating time is preferably 10 hours or shorter, more preferably 9.5 hours or shorter, and still more preferably 9 hours or shorter.

The atmosphere in the container during the heating is not particularly limited. For example, the atmosphere may be a nitrogen atmosphere, an argon atmosphere, or a gas atmosphere containing an S element. Among them, the gas atmosphere containing an S element is preferred from the viewpoint of more suitably preventing the compositional deviation.

When using the gas atmosphere containing an S element, examples of the S element source include a sulfur gas, a hydrogen sulfide gas, and a sulfur dioxide gas, and it is preferable to contain a sulfur gas from the viewpoint of reactivity with the raw material mixture.

The introduction of the gas containing an S element may be achieved by adding an elemental sulfur powder and vaporizing it by heating to form the gas containing an S element. The elemental sulfur powder may be added together with the raw materials when the raw materials are mixed to obtain the raw material mixture, or may be separately added after the raw material mixture is obtained. When the elemental sulfur powder is added together with the raw materials when the raw material mixture is obtained, a mass of the elemental sulfur powder is not included in a mass of the obtained raw material mixture.

As the gas containing an S element, the sulfur gas, the hydrogen sulfide gas, the sulfur dioxide gas, or the like may be introduced, and the gas containing an S element obtained by adding the elemental sulfur powder may be introduced together.

As the gas containing an S element, a gas serving as the S element source is preferably used as a mixed gas with, for example, an inert gas. The mixing proportion with the inert gas is free, and is not particularly limited as long as a cumulative introduction amount of the S element with respect to the mass of the raw material mixture can be a desired value.

Examples of the inert gas include a nitrogen gas, an argon gas, and a helium gas, which may be used alone or in combination of two or more kinds thereof.

The dew point during the heating is preferably -20°C or lower, and a lower limit thereof is not particularly limited, and the dew point is generally about -80°C. The oxygen concentration is preferably 1,000 ppm by volume or less.

The dissolution of the melt of the raw material mixture in step 1 can be confirmed by the absence of a peak derived from a crystal in a high-temperature X-ray diffraction measurement. It can also be confirmed by heating at a predetermined temperature and tilting the melt to confirm the presence or absence of fluidity.

### <Step 2>

Step S2 in the present embodiment is step 2 of cooling and solidifying the melt obtained in step 1 to obtain a glass.

The cooling and solidifying is performed under ambient pressure. Here, ambient pressure means an atmosphere under a pressure of about (gauge pressure ± 15 kPa) as described above.

The pressure during the cooling and solidifying may be under ambient pressure of (gauge pressure ± 15 kPa), and is preferably (gauge pressure ± 10 kPa), more preferably (gauge pressure ± 5 kPa), and still more preferably (gauge pressure ± 2 kPa).

The cooling rate in the cooling and solidifying is 100°C/sec or more, preferably 100°C/sec to 100,000°C/sec, more preferably 200°C/sec to 50,000°C/sec, and still more preferably 300°C/sec to 10,000°C/sec. Here, it has been found that, by performing ultra-rapid cooling at a cooling rate of 100°C/sec or more, which is higher than that in the related art, even a composition in which crystals are precipitated in the related art can be solidified as a glass. Accordingly, compositional freedom is significantly increased, and a composition exhibiting a high lithium ion conductivity can also be selected.

The cooling and solidifying is performed such that the melt is uniformly cooled and there is no thermal unevenness, and thus a high lithium ion conductivity can be achieved as compared with the glass in the related art. As a result, the lithium ion conductivity of a crystallized glass obtained by subjecting the glass to a heat treatment can also be increased. By performing the cooling and solidifying under ambient pressure, the compositional deviation between the composition in the raw material mixture and the composition of the obtained glass can also be reduced.

The cooling rate is 100°C/sec or more, and from the viewpoint of ease of glass formation, the cooling rate is preferably 200°C/sec or more, and more preferably 300°C/sec or more. The upper limit of the cooling rate is not particularly limited, and from the viewpoint of facility capacity, the cooling rate is preferably 100,000°C/sec or less, more preferably 50,000°C/sec or less, and still more preferably 10,000°C/sec or less.

The ultra-rapid cooling as described above can be achieved by using, for example, a twin roll rapid cooling.

The glass obtained above may be used as it is as a sulfide solid electrolyte without being crystallized in step 3. The sulfide solid electrolyte may be further used in a sulfide solid electrolyte layer, an electrode mixture, and a lithium ion secondary battery. The glass may be pulverized or dried depending on the intended use.

### <Step 3>

Step S3 in the present embodiment is step 3 of subjecting the glass obtained above to a heat treatment and crystallizing at least a part of the glass to obtain a crystallized glass.

The crystallized glass thus obtained may be used as a sulfide solid electrolyte, or may be used in a sulfide solid electrolyte layer, an electrode mixture, or a lithium ion secondary battery. Depending on the intended use or the like, the crystallized glass may be pulverized or dried before use.

The temperature in the heat treatment can be determined by the crystallization temperature of the glass.

Specifically, from the viewpoint of effectively promoting the crystallization, the temperature in the heat treatment is preferably (crystallization temperature - 15°C) or higher, may be (crystallization temperature - 10°C) or higher, may be equal to or higher than the crystallization temperature, or may be (crystallization temperature + 1°C) or higher. From the viewpoint of preventing precipitation of crystals other than the desired crystalline phase when heated at a high temperature, the temperature for crystallization is preferably, for example, (crystallization temperature + 20°C) or lower, and more preferably (crystallization temperature + 15°C) or lower.

The crystallization temperature in the present description refers to the peak top temperature of the exothermic peak observed when differential scanning calorimetry (DSC) is performed on the glass obtained in step 2, and the temperature is increased at a heating rate of 10°C/min.

The heating time during the crystallization is, for example, 1 minute or longer, preferably 1 minute to 6 hours, more preferably 1 minute to 3 hours, still more preferably 5 minutes to 2 hours, and even more preferably 10 minutes to 100 minutes. Here, from the viewpoint of a stable quality, the heating time is preferably 1 minute or longer, more preferably 5 minutes or longer, and still more preferably 10 minutes or longer. From the viewpoint of the productivity, the heating time is preferably 6 hours or shorter, more preferably 3 hours or shorter, still more preferably 2 hours or shorter, and even more preferably 100 minutes or shorter.

By adjusting the heating temperature and the heating time during the crystallization, the content ratio of the crystalline phase in the crystallized glass can be adjusted.

Examples of the heating atmosphere during the crystallization include a vacuum atmosphere, a nitrogen atmosphere, an argon atmosphere, and a dry air atmosphere. Among them, a nitrogen atmosphere or an argon atmosphere is preferred from the viewpoint of not impairing the lithium ion conductivity.

The dew point during the crystallization is preferably -30°C or lower.

The oxygen concentration during the crystallization may be that in a dry air environment, and is preferably 5 vol% or less from the viewpoint of safety.

After the heating, the crystallized glass according to the present embodiment is obtained by cooling to room temperature at, for example, 1°C/min to 10,000°C/min.

The crystallized glass obtained above can be suitably adopted as a sulfide solid electrolyte. The sulfide solid electrolyte may be further used in a sulfide solid electrolyte layer, an electrode mixture, and a lithium ion secondary battery. The crystallized glass may be pulverized or dried depending on the intended use.

### EXAMPLES

Hereinafter, the present invention is specifically described with reference to Examples, but the present invention is not limited thereto.

Example 1 to Example 5 and Example 9 to Example 17 are Inventive Examples, Example 6 to Example 8 are Comparative Examples, and Example 18 is a Reference Example.

### <<Test Example>>

### <Example 1 to Example 17>

In a dry nitrogen gas atmosphere, a lithium sulfide powder (manufactured by Albemarle, purity 99.9%) and a phosphorus pentasulfide powder (manufactured by Perimeter, purity 95% to 100%), and optionally, a SiS₂ powder (manufactured by Mitsuwa Chemicals Co., Ltd., purity 99%), a SnS₂ powder (manufactured by Mitsuwa Chemicals Co., Ltd., purity 99.5%), a lithium chloride powder (manufactured by Sigma-Aldrich Co., Ltd., purity 99.995%), a lithium bromide powder (manufactured by Sigma-Aldrich Co., Ltd., purity 99.995%), and a lithium iodide powder (manufactured by Tokyo Chemical Industry Co., Ltd., purity 99.9%) were weighed so as to have composition ratios described in Table 1, and mixed in a mortar to obtain a raw material mixture.

The obtained raw material mixture was put into a carbon container under an S element-containing nitrogen atmosphere having a dew point of -50°C or lower and containing a sulfur powder (manufactured by Sigma-Aldrich Co., Ltd., purity 99.998%) as an S element source, and the container was put into an electric furnace inside a glove box, and heated at a pressure of gauge pressure + 1 kPa and a temperature of 750 °C for 1 hour to obtain a melt (step 1).

Next, the tip of the container was heated and melted, and the molten liquid, which is a melt, was poured onto twin rolls at a discharge rate such that temperature unevenness did not occur, and was cooled to room temperature at a cooling rate of 500°C/sec to obtain a glass (step 2). The pressure at this time was (gauge pressure + 1 kPa), and the cooling rate was adjusted by the discharge rate of the molten liquid, roll gap of the twin rolls, and rotation speed.

### <Example 18>

A lithium sulfide powder (manufactured by Albemarle Co., Ltd., purity 99.9%), a phosphorus pentasulfide powder (manufactured by Perimeter Co., Ltd., purity 95% to 100%), a SiS₂ powder (manufactured by Mitsuwa Chemicals Co., Ltd., purity 99%), and a lithium chloride powder (manufactured by Sigma-Aldrich Co., Ltd., purity 99.995%) were weighed so as to have a composition ratio described in Table 1, and mixed in a mortar to obtain a raw material mixture. In a nitrogen atmosphere glove box, 1 g of the above raw material mixture was placed into a zirconia pot along with 500 zirconia balls having a diameter of 4 mm, and the pot was hermetically sealed. Mechanical milling was performed for 20 hours at a rotation speed of 510 rpm using a planetary ball mill (manufactured by Fritsch, P-7) to obtain a sample of Example 18.

### <<Evaluation>>

### <Glass Composition>

The obtained glass was weighed in a glove box, dissolved in an alkaline aqueous solution, and subjected to compositional analysis for each element.

Specifically, for P, S, Sn, Sb, Si, Ge, Ga, Al, Mg, Ca, Sr, Ba, and Se, ICP emission spectroscopic analysis (apparatus: manufactured by Hitachi High-Tech Science Corporation, model number PS3520UVDDII) was performed.

Li was analyzed by atomic absorption spectroscopy (apparatus: model number ZA3300, manufactured by Hitachi High-Tech Corporation; CsCl was added to give a solution concentration of 0.1% in Li measurement).

Cl, Br and I were analyzed by ion chromatography (apparatus: model number ICS-2100 (column: AS11HC) manufactured by Thermo Fisher Scientific K.K.; a small amount of H₂O₂ was added and diluted with ultrapure water for a measurement).

The results are shown in "Glass composition (atomic%)" in Table 1. In each Example, the composition of the obtained glass did not greatly deviate from the composition of the raw material mixture.

### <Physical Properties: Lithium Ion Conductivity>

The obtained glass was pulverized in a mortar and then passed through a 100 µm sieve to obtain a powder having an average particle size (D50) of about 20 µm, which was used as a sample.

The sample was compressed under a pressure of 380 MPa to prepare a powder compact as a measurement sample, and measured by using an electrochemical impedance spectroscopy (potentiostat/galvanostat VSP, manufactured by Bio-Logic Sciences Instruments). The measurement conditions were a measurement frequency of 100 Hz to 1 MHz, a measurement voltage of 100 mV, and a measurement temperature of 25°C, and the lithium ion conductivity was determined from the obtained Nyquist plot. The results are shown in "σ₂₅ (mS/cm)" in the item of "Physical properties" in Table 1.

### <Physical Properties: Glass Transition Temperature>

The obtained glass was subjected to differential scanning calorimetry (DSC) under a condition of 10°C/min. The temperature at the first inflection point of the obtained DSC chart was determined as a glass transition temperature. The results are shown in "Tg (°C)" in the item of "Physical properties" in Table 1. As a result of performing the present measurement on the sample of Example 18, it was found that the sample did not have a glass transition temperature.

### <Physical Properties: Generation Amount of H₂S>

The obtained glass was pulverized in a mortar and then passed through a 100 µm sieve to obtain a powder having an average particle size (D50) of 10 µm to 20 µm, which was used as a sample. The amount of hydrogen sulfide (H₂S) generated, as measured when 10 mg of such a sample was exposed to the air humidified to a dew point of -30°C for 1 hour, was monitored, and the amount generated per 1 g of the sample was determined as the amount of H₂S generated (mL/g). The results are shown in "Generation amount of H₂S (mL/g)" in the item of "Physical properties" in Table 1. In Table 1, "-" in the result of "Generation amount of H₂S (mL/g)" indicates that the measurement was not performed.

**[Table 1]**

| | Production method | Glass composition (atomic%) | | | | | | | |
|---|---|---|---|---|---|---|---|---|---|
| | | Li | P | Si | Sn | S | Cl | Br | I |
| Example 1 | Melt quenching method | 40.2 | 8.7 | 0 | 2.2 | 43.5 | 0 | 0 | 5.4 |
| Example 2 | Melt quenching method | 40.2 | 8.7 | 0 | 2.2 | 43.5 | 0 | 5.4 | 0 |
| Example 3 | Melt quenching method | 38.6 | 5.8 | 7 | 0 | 47.3 | 1.2 | 0 | 0 |
| Example 4 | Melt quenching method | 38.5 | 11.5 | 0 | 0 | 46.2 | 0 | 2.3 | 1.5 |
| Example 5 | Melt quenching method | 38.6 | 11.4 | 0 | 0 | 45.7 | 0 | 0 | 4.3 |
| Example 6 | Melt quenching method | 28.6 | 0 | 28.6 | 0 | 42.9 | 0 | 0 | 0 |
| Example 7 | Melt quenching method | 41.8 | 0 | 10.4 | 0 | 36.6 | 0 | 0 | 11.1 |
| Example 8 | Melt quenching method | 28.6 | 15.2 | 1.9 | 0 | 54.3 | 0 | 0 | 0 |
| Example 9 | Melt quenching method | 38.5 | 11.5 | 0 | 0 | 46.2 | 0 | 0 | 3.8 |
| Example 10 | Melt quenching method | 40.0 | 10.0 | 0 | 0 | 40.0 | 0 | 0 | 10.0 |
| Example 11 | Melt quenching method | 40.0 | 10.0 | 0 | 0 | 40.0 | 0 | 10.0 | 0 |
| Example 12 | Melt quenching method | 41.7 | 8.3 | 0 | 0 | 33.3 | 0 | 0 | 16.7 |
| Example 13 | Melt quenching method | 41.7 | 8.3 | 0 | 0 | 33.3 | 0 | 16.7 | 0 |
| Example 14 | Melt quenching method | 41.7 | 8.3 | 0 | 0 | 33.3 | 0 | 8.3 | 8.3 |
| Example 15 | Melt quenching method | 41.7 | 8.3 | 0 | 0 | 33.3 | 0 | 1.7 | 15.0 |
| Example 16 | Melt quenching method | 41.7 | 8.3 | 0 | 0 | 33.3 | 0 | 5.0 | 11.7 |
| Example 17 | Melt quenching method | 33.7 | 12.4 | 0 | 0 | 42.0 | 0 | 0 | 11.9 |
| Example 18 | Mechanical milling method | 38.6 | 5.8 | 7 | 0 | 47.3 | 1.2 | 0 | 0 |

**(Table 1 continued)**

| | Physical properties | | |
|---|---|---|---|
| | σ₂₅ (mS/cm) | Tg (°C) | Generation amount of H₂S (mL/g) |
| Example 1 | 3.5 | 188 | 0.41 |
| Example 2 | 2 | 193 | 0.31 |
| Example 3 | 2 | 269 | 0.77 |
| Example 4 | 2 | 190 | 0.01 |
| Example 5 | 2 | 160 | - |
| Example 6 | 0.1 | 338 | - |
| Example 7 | 0.8 | 220 | - |
| Example 8 | 0.3 | 220 | - |
| Example 9 | 2 | 180 | 0 |
| Example 10 | 2.3 | 143 | 0 |
| Example 11 | 2 | 151 | 0 |
| Example 12 | 5.4 | 130 | 0 |
| Example 13 | 2.1 | 131 | 0 |
| Example 14 | 2.9 | 140 | 0 |
| Example 15 | 4.3 | 130 | 0 |
| Example 16 | 3.3 | 134 | 0 |
| Example 17 | 2.7 | 175 | - |
| Example 18 | 0.3 | None | 4.5 |

From the above results, the glass according to the present embodiment became vitrified even in the case of a composition that would crystallize under the mechanical milling method in the related art.

The glass according to the present embodiment could achieve a high lithium ion conductivity of 2 mS/cm or more while being in a glass state.

Among them, it was suggested that the glass according to the present embodiment can achieve a higher lithium ion conductivity by increasing the content of I.

It was found that the glass according to the present embodiment had a small amount of H₂S generated when exposed to the air having a dew point of -30°C for 1 hour, and also had high water resistance. The glasses of Example 5 and Example 17, in which the water resistance was not evaluated, were also suggested to have high water resistance since high homogeneity without residues such as residual sulfur and an unreacted raw material was achieved by melting the raw material mixture followed by rapid cooling.

Although various embodiments have been described above, it is needless to say that the present invention is not limited to such examples. It is obvious for a person skilled in the art that various modifications and variations can be made within the scope of claims and it is understood that such modifications and variations naturally belong to the technical scope of the present invention. The constituent elements described in the above embodiments may be combined in any manner without departing from the spirit of the invention.

The present application is based on a Japanese Patent Application (No. 2023-168392) filed on September 28, 2023, a Japanese Patent Application (No. 2023-168395) filed on September 28, 2023, and a Japanese Patent Application (No. 2024-057517) filed on March 29, 2024, contents of which are incorporated herein by reference.

## Claims

1. A glass comprising:
Li and P as elements constituting a cation component; and
S as an element constituting an anion component,
wherein a composition of the glass, as expressed in atomic%, satisfies Li: 30% to 42% and P: 5% to 16%,
the glass has a glass transition temperature of 110°C to 300°C, and
the glass has a lithium ion conductivity of 2 mS/cm or more at 25°C.

2. The glass according to claim 1, further comprising at least one selected from the group consisting of Sn, Sb, Si, Ge, Ga, Al, B, C, Mg, Ca, Sr, and Ba as an element constituting the cation component.

3. The glass according to claim 1, further comprising at least one selected from the group consisting of F, Cl, Br, I, O, Se, N, and C as an element constituting the anion component.

4. A crystallized glass comprising a crystalline phase derived from the glass according to any one of claims 1 to 3.

5. A sulfide solid electrolyte comprising the crystallized glass according to claim 4.

6. An electrode mixture comprising the sulfide solid electrolyte according to claim 5.

7. A solid electrolyte layer comprising the sulfide solid electrolyte according to claim 5.

8. A lithium ion secondary battery comprising the sulfide solid electrolyte according to claim 5.
